# EUROPEAN PATENT APPLICATION

(11) **EP 2 248 936 A1**
(43) Date of publication of application: **10.11.2010**
(21) Application number: 09006301.7
(22) Date of filing: 08.05.2009
(51) Int. Cl.: D06F 37/20, D06F 37/22, F16C 35/04

(54) **Bearing-holder plastic hub for drive shaft of washing machines**

(71) Applicant: Electrolux Home Products Corporation N.V., 1930 Zaventem (BE)
(72) Inventor: Sanita', Massimo, 33080 Porcia (PN) (IT); Bortolotti, Paolo, 33080 Porcia (PN) (IT)
(74) Representative: Nardoni, Andrea

(57) **Abstract**

Bearing-holder plastic hub (4) for rotating elements, the hub being suitable for being engaged by a drive shaft (6) of a drum of washing and/or drying machines, comprising a hollow body which extends along a longitudinal axis (X-X) and supports at least a bearing (5), **characterized in that** said body comprises reinforcing fibres or filaments disposed so that to create at least one layer of an organized texture (8) at least in correspondence of the bearing (5).

## Description

### FIELD OF THE INVENTION

. The present invention relates to a bearing-holder plastic hub for receiving a drive shaft for the drum of a washing machine and, in particular, to a bearing-holder plastic hub with or without stiffening fibres, which is directly fixed to the bearings of said drive shaft.

### BACKGROUND OF THE INVENTION

. Laundering tubs of plastic material for a laundry washing machine are already known. Such tubs are conventionally moulded in the form of cylindrical vessel that surrounds the drum, comprising a circular opening opposite to an circular closed wall. The circular closed wall encapsulates a metallic hub for a corresponding bearing block. The encapsulation is carried out by injection moulding of the whole tub in a suitable mould wherein the metallic hub has been previously inserted.

. However, the injection moulding gives rise to considerable intrinsic stresses in the whole tub and particularly in correspondence of the metallic hub. In fact, it has been noted that the plastic material cools down from the hardening temperature to the room temperature, shrinking in the process. Due to the different shrinking behaviour of the plastic and metal materials, the tub can become deformed in correspondence to the contact zone with the metallic hub. This causes a non-homogeneity of the tub so that during the whole service life and in particular during stress peaks cracks easily arise.

. To try to solve the above problem, it has been suggested to injection moulding a plastic material consisting in special plastics reinforced with fibres (see GB 2333300).

. Notwithstanding, the solution represented by the fibre reinforced plastics does not avoid the above mentioned problem of different shrinking behaviour between the plastic material of the tub and the metal material of the hub. In fact, it has been observed that cracks occur specially in the integration area of the hub.

. Differently, the European patent EP 0789103 suggests to obtain plastic housing for the drum drive shaft bearings incorporating a metal reinforcement. In this way, the conventional bushing used for housing the bearings is replaced by a simple metal reinforcement sandwiched or embedded in the plastic material. Again, the proposed solution still does not completely avoid the above mentioned shrinkage problems incurring between the materials, i.e. plastic and metal. In addition, in the case of a metal element sandwiched between two plastic layers, this cannot guarantee the required resistance of the hub undergoing to several mechanical stresses.

. A further solution has been proposed as described in the European patent application EP 0219115, wherein a sleeve for bearings has been made separately from the plastic tub by injection moulding of a plastic material having a high resistance against mechanical stresses. In particular, said sleeve is provided with at least one spacer element interposed between bearings for maintaining them at axially spaced positions and a corresponding plastic tub is injected moulding over said sleeve. It is to be noticed that the plastic material having high resistance of the sleeve consists in glass-fibre reinforced polyester, while the plastic material of the tub is a material having lesser resistance against mechanical stresses than the previous one, as polypropylene.

. This last solution, however, even if it avoids the shrinking problem of the above solutions, suffers of the drawback cause by the incompatibility between the two plastic materials of the hub and the tub. In fact, is has been seen that the polypropylene of the tub injection-moulded over the polyester of the hub shrinks so that it becomes firmly fixed around the hub. Said fixation nevertheless is only of mechanical nature just because of the incompatibility of the two materials. As a consequences, it has been observed that after a certain service period the two tub and hub components tend to separate, which causes severe problems as can be clearly understood.

### SUMMARY OF THE INVENTION

. The technical problem faced by the present invention is thus to provide a bearing-holder plastic hub for receiving a drive shaft for the drum of a washing machine which hub is resistant against the mechanical stresses so that to guarantee a long service life and, at the same time, does not show any drawbacks derivable form deformation or shrinkage during its forming by injection moulding.

. A further problem solved is to provide a optimal coupling between the plastic tub and the bearing-holder plastic hub notwithstanding their two different and incompatible materials.

. Said problems are solved by providing a bearing-holder plastic hub wherein the plastic material has been reinforced by a particular selection of reinforcing materials and/or has been itself provided in a composition to render it compatible with the tub plastic material.

. Therefore, a first object of the present invention is a bearing-holder plastic hub for receiving a drive shaft for the drum of a washing machine.

. A second object is a tub for a washing machine comprising the above hub.

. A further object is a washing machine comprising a hub and a tub as above.

. A still further object is a process form producing a tub with a hub as above.

### BRIEF DESCRIPTION OF THE DRAWINGS

. Further features and the advantages of the present invention will be more evident during the following description of some embodiments, given only by nonlimiting examples of the invention, with reference to the figures wherein:
- Figure 1 is a schematic lateral section view of a washing machine;
- Figure 2 is a lateral section view of the hub of the invention;
- Figure 3 is an enlarged particular of the distribution of the reinforcing elements of the hub of Figure 2;
- Figure 4A is a schematic, lateral sectioned view of a first moulding phase for producing the hub of the invention;
- Figure 4B is a schematic, lateral sectioned view of a second moulding phase for producing the hub of the invention;
- Figure 4C is a schematic, lateral sectioned view of a third moulding phase for producing the hub of the invention;
- Figure 4D is a schematic, lateral sectioned view of a fourth moulding phase for producing the hub of the invention;
- Figure 5 is a schematic, lateral sectioned view of a over-moulding phase for producing the hub of the invention integrated with the tub of a washing machine.

### DETAILED DESCRIPTION OF THE INVENTION

. The main difficulty usually encountered in providing bearing-holder plastic hubs is to built up a hub mechanically resistant to uphold the bearings in the correct position and alignment. The contact surface forces between the hub and the bearings are extremely high. The plastic in contact with the bearings needs to be reinforced by fibres to get high resistance and stiffness and distribute the stresses on a wider contact area.

. Conventional compounds containing reinforcing fibres are not effective because they are not able to prevent local failure. In particular, it has been observed that fibres are usually embedded in a resin in the form of short or even long fibres randomly distributed therein.

. Accordingly, it has been proposed to provide a hub comprising at least one fibre mat or net of fibres which are long fibres organised as a sort of a woven. In other words, the basic idea is to embed into a resin a texture, tissue or web made by reinforcing fibres instead of the known non-continuous, not-organised fibres. It is to be noticed that the texture of fibres is disposed around and along the hub axis, as will be appreciated in the following description with reference to the drawings.

. In particular, the fibres are continuous fibres or filaments which are woven to form a tissue, a mat or a matrix which in any case is organised in a texture extending around and along at least those parts of the hub that contact the bearings. Preferably, the fibre texture extends substantially along the whole length of the hub.

. Moreover, several different type of textures can be provided. For instance, the texture can be provided as a woven fabric, in other words a weft or woof, wherein the filaments are disposed parallel to each other (0°) with respect to the hub axis, perpendicular to each other (90°) or inclined of 45° with respect to the hub axis. It is to be noticed that several compositions of said orientations can be provided in the same fabric so that to create a particularly stiffness woven weft. Also, said orientations can refer to fibres or filaments themselves and not to the hub axis.

. Preferably, the orientation of the fibres is selected in order to withstand to the stressing forces exercised between the hub and the bearings. Said forces is mainly oriented substantially perpendicular to the nub axis so that they are generally called shearing forces. Therefore, the orientation of the fibres are mainly along the hub axis.

. However, since a minor friction force is exercised also around the contact area between the hub and the bearings in a tangential direction, the texture of the fibres can be provided comprising a combination of the above axially orientation with a tangential orientation at least in said contact area.

. Preferably, the fibre texture is embedded in the resin so that it is very close to the above contact area with the bearings. In other words, the fibre texture is separated from the bearings by a thin layer of resin.

. In addition, more than one layer of textured fibres can be provided in order to further improve the mechanical resistance to the above stressing forces. In particular, separate and distinct layer can be superimposed which have different kind of texture and orientation of the fibres. Moreover, as already stated above, the fibres or filaments shall be organized in a texture having a specific weight ranging from 20 to 1000 g/m², preferably between 50 and 700 g/m², and whose pattern is determined by a fibres or filaments orientation. Preferably, the pattern orientation of the texture is the one disclosed above. Several layers can be superimposed, each having the same or different orientation of the fibres or filaments. For instance, a preferred sequence of layers can be represented by one to ten layer starting form a first inner layer, i.e. the layer closer to the hub axis, whose filaments are parallel oriented (0°) to the hub axis woven or interlaced with filaments perpendicularly oriented (90°) to said axis, then a second layer whose filaments are 45° woven or interlaced with respect to said axis, then again another layer as the first one and another as the second one and so on.

. According to a further embodiment, the textured fibre layers can be embedded into the resin so that to be each separated by the interposition of a resin layer.

. With reference to the kind of fibres that can be used to produce the reinforcement of the bearing-holder plastic hub, several known fibres can be selected. The most commonly used fibres to reinforce plastic as well as ceramic materials are natural fibres as hemp and flax, polycrystalline fibres, glass, carbon, aluminium, boron, titanium, polyester or aramid fibres or filaments. In particular, Kevlar (Kevlar 49), Twaron® (poly-paraphenylene terephthalamide), Technora® (aromatic copolyamide), Vectran (aromatic polyester), Teijinconex® (poly-(metaphenylene isophthalamide)), E-Glass (E-Glass is a low alkali glass with a typical nominal composition of SiO₂ 54wt%, Al₂O₃ 14wt%, CaO+MgO 22wt%, B₂O₃ 10wt% and Na₂O+K₂O less then 2wt%) and S-Glass (S-Glass has a typical nominal composition of SiO₂ 65wt%, Al₂O₃ 25wt%, MgO 10wt%), ceramics/alumina fibres are preferred. It is to be noticed that said fibres can be of only one kind or in combination as a mixture of different fibres or filaments. In any case, they shall be in the form of long fibres or filaments, i.e. they shall substantially cover the whole length of the plastic element within which the are embedded. Most preferred are the fibres as reported in the following table 1 with corresponding technical features:

**TABLE 1**

| **Fibre Type** | **Density (g/cm³)** | **Tensile Strength (MPa)** | **Young modulus (GPa)** |
|---|---|---|---|
| E-Glass | 2.55 | 2000 | 80 |
| S-Glass | 2.49 | 4750 | 89 |
| Ceramics/Alumina | 3.28 | 1950 | 297 |
| Carbon | 2.00 | 2900 | 525 |
| Kevlar 49 | 1.44 | 3750 | 136 |

. Therefore, generally, the fibres or filaments have a density ranging between 1.00 g/cm³ and 4.00 g/cm³, preferably between 1.4 and 3.3, a tensile strength between 1500 and 5500 MPa, preferably between 1800 and 5000, and a Young modulus between 50 and 800 GPa, preferably between 80 and 550.

. Such fibres are used in combination with a polymeric matrix to provide a composite material. Polymer matrixes conventionally used are organic or inorganic polymer matrix, organic matrixes comprising thermosetting and thermoplastic resins. Among the thermosetting and thermoplastic resins the most commonly used are epoxy, polypropylene, polyester, vinylester, phenolic, silicone and polyamide resins. The most commonly used thermoplastic resins are polyamide and polypropylene polymers. In particular, polypropylene is widely used since it is employed for forming the tubs of a washing machine. It has been observed that polypropylene, when reinforced with the above identified texture, is suitable to resist to the stresses arising in correspondence of a hub for a washing machine. However, polypropylene still did not show the excellent properties that were researched. Therefore, it has been proposed to select a different polymer having high strength such as polyamide, polyethylene, polystyrene. It is to be noticed that with the term "high strength polymer" in the present description identifies all those polymers that have a melt/transition temperature of at least 210°C. Preferred plastics are polyamide 66 (PA66, CAS Nr. 32131-17-2), polyamide 46 (PA46, CAS Nr. 50327-22-5),polyethylene terephthalate (PET CAS Nr. 25038-59-9), syndiotactic polystyrene (sPS, CAS Nr. 28325-75-9). Examples of commercially available PA66 are Zytel, Capron, Ultramid, Technyl, of PA46 Stanyl, of PET Rynite, Tenite and of sPS Questra.

. Particularly preferred is Polyamide 66 (nylon 66) whose chemical structure is the following:

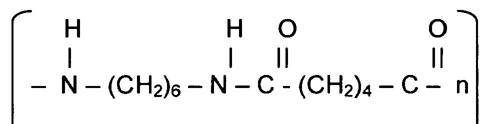

. However, in that case, a different problem arises which derives from the incompatibility of the polyamide with the polypropylene conventionally employed for moulding the tub of washing machine. Polypropylene is a "low strength polymer" which is defined, in the present description, as having a melt/transition of less than 210°C. Therefore, it has been studied a blend adapted to be fully compatible with polypropylene so that the tub plastic can be injection-moulded over the hub plastic. In particular, it has been used a compatibilizer which is an intermediate resin able to put a stable chemical bond between the alloy phases. The usual chemical structure of that resin is a polymer with a reactive functional group able to react with both kind of polymers (as for instance the above PA and PP) or it has a chemical structure whose segments are compatible with both polymers. Examples of that substances are reported in the following table 2:

**TABLE 2**

| **Polymer Type** | **Polymer Symbol** | **Trademark** |
|---|---|---|
| - Polypropylene grafted with anhydride maleic | PP-g-MAH | Polybond, Exxelor, Fusabond |
| - Polypropylene grafted with acrylic acid | PP-g-AAc | Polybond, Fusabond |
| - Ethylene-Acrylic-Maleic Anhydride | EA-MAH | Lotader |
| - Ethylene-Acrylicb Ester-Glycidyl Methacrylate | EA-GMA | Lotader |
| - Styrene-butadiene block copolymer | SBS | Kraton, Elvaloy |
| - Styrene-ethylene/propylene-styrene | SEPS | Kraton |
| - Styrene-ethylene/butylene-styrene | SEBS | Kraton, Elvaloy |
| - Styrene-ethylene/butadiene-styrene grafted MAH | SEBS-g-MAH | Kraton |
| - Styrene-ethylene/butadiene-styrene copolymer | SEBS-g-GMA | Kraton, Elvaloy |

. A blend of that kind is a combination of the preferred polyamide 66 with polypropylene and the grafting resin PP-gMAH (maleic anhydride grafted PP). The blend can be further added with filler such as calcium carbonate, kaolin, calcined kaolin, silica, talcum, mica. All these compounds making up the composition of the resin are preferably present as a blend, wherein PA66 ranges as weight fraction percentage [phc] (part per hundred of composition) from 5% to 95%, preferably from 20% and 50%, PP and PP-g-MAH each from 1% to 30%, preferably from 5% and 10%, and a filler from 3% to 80%, preferably from 30% and 60%.

. It is to be noticed that, the general criteria is to make an intimate blend between iso-tactic polypropylene homo-polymer (iPP) (Cas nr. 95751-29-4), which is commonly used to injection-moulding washing machine tub or analogous thereof, and a high thermal performance resin such as those above disclosed.

. However, other blends can be selected. Some further preferred examples are reported in the following table 3:

**TABLE 3**

| Low strength Polymer | High strength polymer | Compatibilizer | Low strength Polymer* | High strength polymer* | Compatibilizer* |
|---|---|---|---|---|---|
| iPP | sPS | SBS, SEBS, SEBS-g-GMA, SEBS-g-MAH SEPS | 0-20 | 60-80 | 2-20 |
| iPP | PET | PP-g-MAH, PP-g-AAc, EA-GMA · | 0-20 | 60-80 | 2-20 |
| iPP | PA66 | PP-g-MAH, EA-g-MAH | 0-20 | 60-80 | 2-20 |
| iPP | PA46 | PP-g-MAH, EA-g-MAH | 0-20 | 60-80 | 2-20 |

| | | | | | |
|---|---|---|---|---|---|
| *Weight franction % [phr] (parts per hundred of resin) | | | | | |

. It is to be noticed that in general the high strength polymer and the compatibilizer are the basic components of the blend. The presence of a low strength polymer is preferred since it increases the compatibility with the plastic that will be over injected and, further, allows to reduce the amount of the more expensive high strength polymer so that a low cost blend can be obtained.

. In addition, it can be said that when blends are used, they comprise a high strength polymer having a melt/transition temperature of at least 210°C being present in an amount from 1 and 99, preferably 10% to 98%, a compatibilizer present in an amount from 99 and 1, preferably 90% to 2% as weight fraction percentage [phr], further optionally comprise a low strength polymer having a melt/transition temperature less than 210°C and/or a filler selected form calcium carbonate, kaolin, calcined kaolin, silica, talcum, mica, glass.

. A particularly preferred composition of the composite material according to the invention comprises from 0.2% to 30% of reinforcing fibres or filaments and from 99.8% to 70% of the polymer blend with respect to the fraction volume of the composition. Most preferred, the composition comprises from 0.5% to 15% of reinforcing fibres or filaments and from 99.5% to 85% of the polymer blend.

. Alternately to the above composition, composite materials comprising a thermosetting resin are for instance named prepreg or pre-impregnated composite materials. Usually, prepreg materials comprises between 15% and 50% of thermosetting resins with respect to the humid weight of the prepreg composition, the remaining being the above specified fabric.

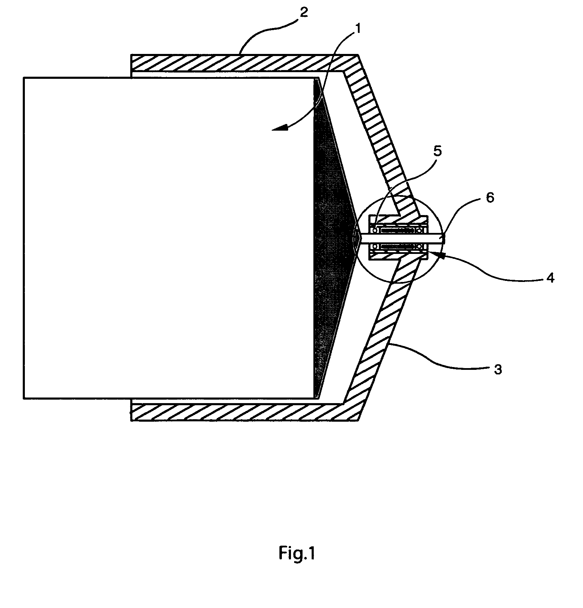

. The bearing-holder plastic hub according to the present invention can be advantageously employer for holding bearings of a conventional drive shaft of a motor of a washing machine. As represented in figure 1, with the reference number 1 it is indicated a drum of a washing machine, which drum is surrounded by a conventional plastic tub 2. The plastic tub 2 comprises a rear wall 3 connected to the hub 4 by means of the above disclosed over injection-moulding so that the contact surfaces of the hub and the tub are moulded together. Conventionally bearings 5 are interposed between the hub and the drive shaft 6.

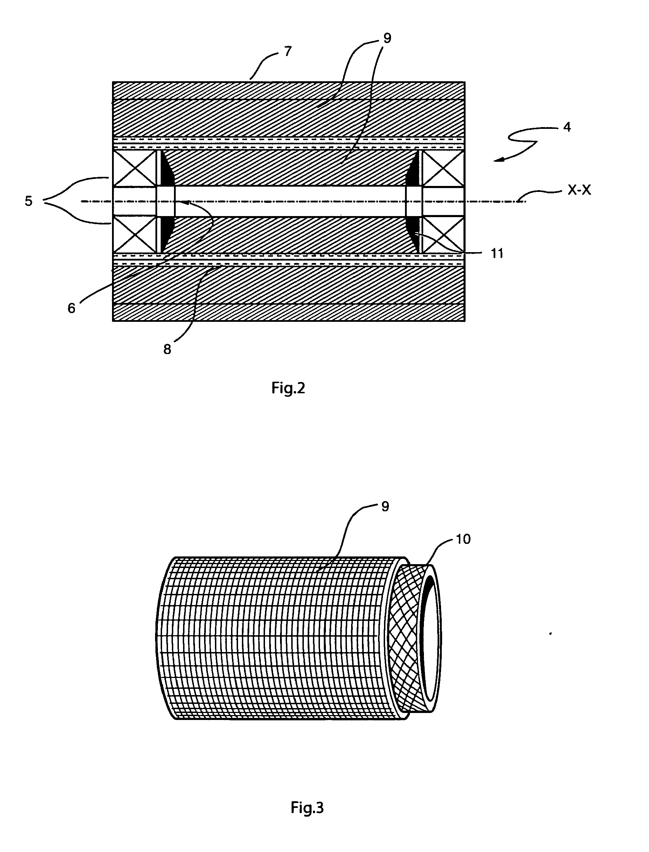

. As best represented in figure 2, the hub 4 extending along an axis X-X is surrounded by an external wall 7 being the cylindrical portion of the rear wall 3 of the tub over injection-moulded onto the hub. The hub 4 is made of the above described reinforced plastics, wherein a reinforcing fibre texture 8 is embedded into a resin bled 9 as the above one. The texture 8 is at least positioned in correspondence of the bearings. Preferably, the texture 8 extends along the whole axial length of the hub 4.

. Moreover, the texture 8 can comprise one layer of reinforcing fibres or filaments or more layers coaxially arranged. In particular, as represented in figure 3, the texture 8 is composed of two layers 9, 10, wherein layer 9 shows an orientation of the fibres along and perpendicular to the axis X-X of the hub, while layer 10 has fibres with an orientation of 45° with respect to the hub axis. In this manner, both the above described shearing and tangential forces are reliably and effectively opposed.

. Preferably, the hub 4 can also comprise bearing shields 11 to protect the bearings against dust or dirty in general.

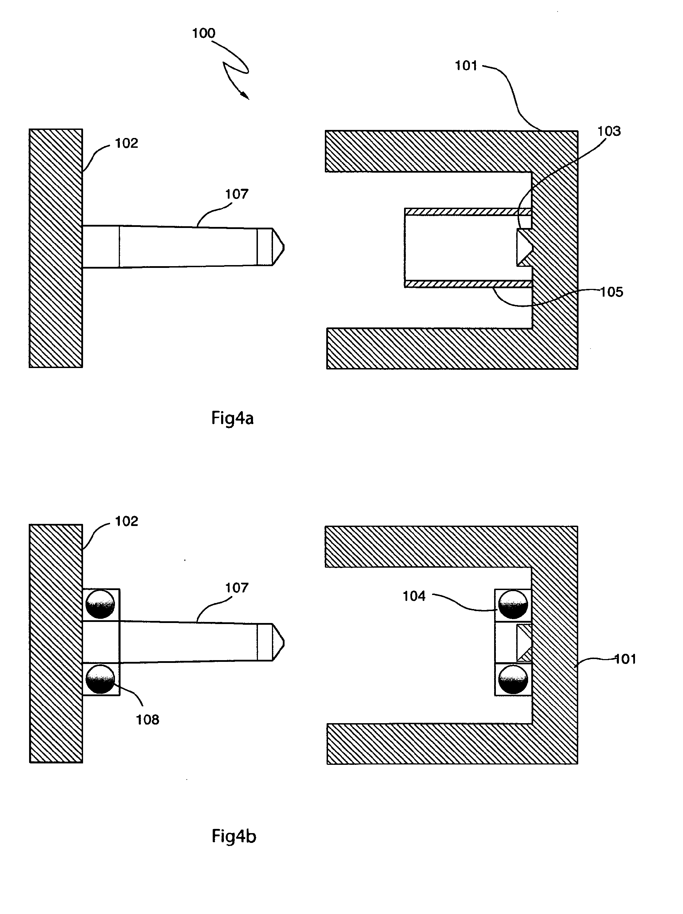

. A hub as the one just disclosed can be produced according to the injection-moulding technology. Several different process are available and are suitable for said purpose. For instance, with reference to figures 4A-4D, a process for producing a bearing-holder plastic hub for holding bearings of a drive shaft of a motor of a washing machine comprises the following phases:
- providing a mould comprising a first part and a second part that can engage each other to create moulding chamber, said first part including a first holding portion to hold first bearings in position during the injection moulding and at least one slot to receive at least a fabric sleeve, said second part including a second holding portion to hold second bearings;
- placing first bearings onto said first holding portion of said first part and second bearings onto said second holding portion of said second part;
- placing at least a fabric sleeve onto said at least one slot of said first part and clamping it onto said slot;
- closing said chamber so that said second holding portion of the second part engages the first holding portion of the first part to create a support extending along the whole moulding chamber;
- injection-moulding a plastic material as above, to embed the first and second bearings and the at least one fabric with said material;
- solidifying the plastic material;
- opening the mould to release the finished fabric-reinforced bearing-holder plastic hub.

. It is to be noticed that the above process can be carried out without the step of placing bearings into the mould. In fact, the hub of the invention can be provided without bearings, which bearings can be mounted afterwards. In other words, the hub can be formed and provided with a suitable housing for a subsequent housing of the bearings. This can be done by the skilled man in the art by adapting the mound with a shape so that said housing can be created during the moulding process.

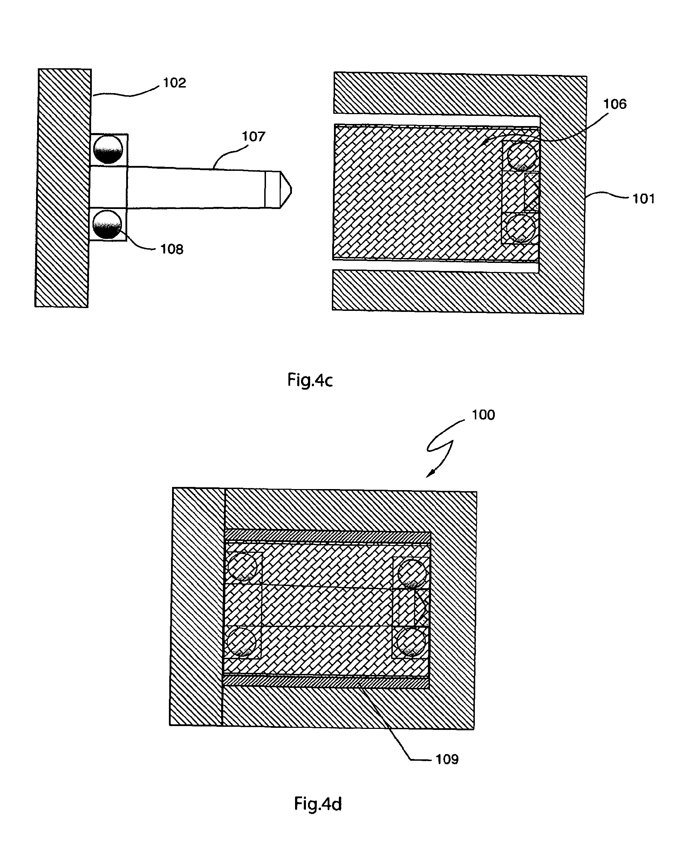

. In particular, with reference to figure 4A, a mould 100 for injection-moulding comprises a first part 101 configured as a moulding chamber and a second part 102 configure as a closing portion for said chamber. The first part 101 is provided with a first holding portion 103 to hold first bearings 104 in position during the injection moulding (figure 4B) and at least a slot 105 to receive at least a fabric sleeve 106 (figure 4C). The second part 102 is provided with a second holding portion 107 to hold second bearings 108 (figure 4B). Further, said second holding portion 107 is configured as a cylindrical pin that can engage with the first holding portion 103 during the closing of the mould to create a core inside the moulding chamber around which the plastic material will be injected (figure 4D).

. Once the hub is formed, it can be put into a further mould for the injection moulding of the tub so that to surround said hub. In summary, such kind of moulding can be performed according to a conventional process comprising the step of:
- providing a moulding chamber reproducing the shape of at least the rear portion of a tub;
- positioning the plastic textile-reinforced hub of the invention within said chamber;
- injecting the above specified plastic material into said chamber so that also to surround said hub and thus herein obtaining a fusion of the contact surface of said hub with said injected plastic material.

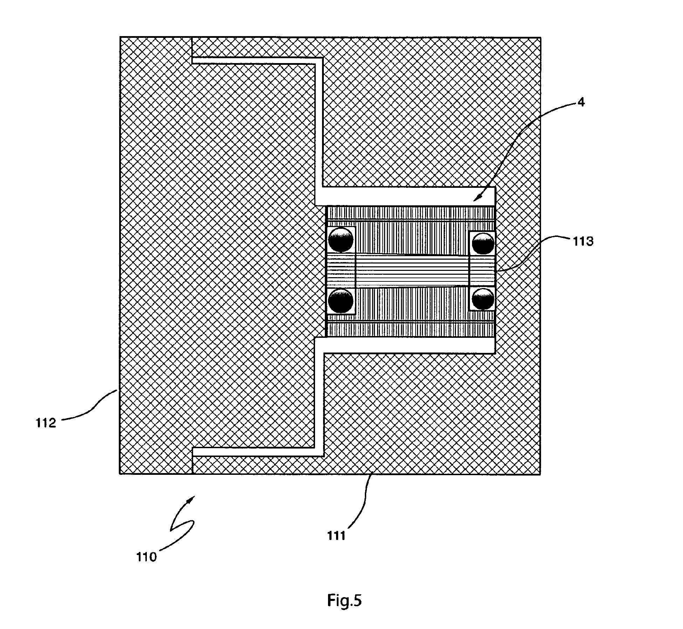

. As can be see in figure 5 as an example of an embodiment of the above moulding process, a mould 110 comprises a first part 111 representing a moulding chamber that has the external profile of the rear portion of a drum of a washing and/or drying machine, a second part 112 to close said firs part so that to leave a suitable empty space reproducing the shape of the rear portion of the drum. In particular, said second part 112 is provided with a core 113 onto which the hub 4 of the present invention is mounted. After having closed the mould 110, the plastic material according to the above description can be injected into said chamber to fill the empty space ad, thus, also surrounding the hub 4.

. In view of the above, it is now evident that several advantages have been reached with the solution of the present invention.

. First of all, the adoption of a texture of fibres or filaments, i.e. an organised texture, allows to surprisingly improve the mechanical resistance against the stresses which the hub undergoes at. Consequently, a very long life services of the hub is reached.

. Moreover, the particular selection of a resin blend consisting of polyamide PA66 and PP-g-MAH, eventually in the presence of PP, for the hub overcomes the above mentioned incompatibility problems of the polypropylene of the tub. That also means that the tub is not only connected to the hub by simple shrinking of the plastic by, advantageously, there is a fusion of the contact surfaces of the hub and the tub so that their contact surfaces are melted. Accordingly, a more intimate and resistant contact as been created. It is to be noticed that said resin blend can also be used for hub without reinforcing fibres or with reinforcing fibres not organized in a texture, according to the known reinforced hub.

. Additionally, the use of a bearing-holder plastic hub allows from one hand to recycle the material and to the other hand to keep the costs lower than those involved when using metallic hubs.

. Above all, the entire manufacturing process for producing a washing machine is greatly simplified since homogeneous materials have been employed.

. Therefore, all the drawbacks above mentioned with reference to the prior art have been overcome. In the meantime, several important advantages have been reached. In any case, further embodiments can be carried out, all nevertheless being included in the scope of the present invention as defined by the following claims.

## Claims

1. Bearing-holder plastic hub (4) for rotating elements, the hub being suitable for being engaged by a drive shaft (6) of a drum of washing and/or drying machines, comprising a hollow body which extends along a longitudinal axis (X-X) and supports at least a bearing (5), **characterized in that** said body comprises reinforcing fibres or filaments disposed so that to create at least one layer of an
organized texture (8) at least in correspondence of the bearing (5).

2. Bearing-holder plastic hub (4) according to claim 1, wherein said texture (8) comprises fibres or filaments disposed parallel and/or perpendicular and/or inclined of 45° with respect to each other or with respect to the longitudinal axis (X-X).

3. Bearing-holder plastic hub (4) according to claim 1 or 2, wherein said texture has a specific weight ranging from 25 to 700 g/m².

4. Bearing-holder plastic hub (4) according to any one of claims 1 to 3, comprising a plurality of superimposed layers of said organized texture of fibres or filaments, each layer having the same or different orientation of the fibres or filaments, preferably said plurality having the sequence of superimposed layers represented by up to ten layers starting form a first inner layer whose filaments or fibres are parallel to the hub axis (X-X) interlaced with fibre or fibres perpendicular to said axis, a second layer whose filaments are 45° inclined with respect to said axis and interlaced each other, said layers being alternated.

5. Bearing-holder plastic hub (4) according to any one of claims 1 to 4, wherein said reinforcing fibres or filaments are selected from natural fibres, polycrystalline fibres, glass, carbon, aluminium, boron, titanium, polyester or aramid fibres or filaments and mixtures thereof, preferably selected form Kevlar, Twaron, Tchnora, Vectran, Teijnconex, E-Glass, S-Glass, ceramics/aluminia and carbon fibres or filaments.

6. Bearing-holder plastic hub (4) according to claim 5, wherein said fibres or filaments have a density ranging from 1.00 g/cm³ to 4.00 g/cm³, tensile strength between 1500 and 5500 MPa and young modulus between 50 and 600 GPa.

7. Bearing-holder plastic hub (4) according to any one of claims 1 to 7, wherein said hollow body comprises an organic or inorganic polymer blend for supporting said organized texture of fibres or filaments, preferably said polymer blend comprises thermosetting and thermoplastic resins selected from epoxy, polypropylene, polyester, vinylester, phenolic, silicone and polyamide resins and mixtures of the same kind.

8. Bearing-holder plastic hub (4) according to claim 7, wherein said resins are selected from, polyamide 66, polyamide 46, polyethylene terephthalate, syndiotactic polystyrene and polypropylene and mixtures of the same kind.

9. Bearing-holder plastic hub (4) according to claim 7 or 8, wherein said resins comprise a compatibilizer which is an intermediate resin able to put a stable chemical bound between an alloy phase, preferably selected form PP-g-MAH, PP-g-AAC, EA-MAH, EA-GMA, SBS, SEPS, SEBS, SEBS-g-MAH, SEBS-g-GMA.

10. Bearing-holder plastic hub (4) according to any one of claims 7 to 9, wherein said resins are blends comprising a high strength polymer having a melt/transition temperature of at least 210°C and being present in an amount from 10% to 98%, a compatibilizer present in an amount from 90% to 2% as weight fraction percentage [phr], further optionally comprising a low strength polymer having a melt/transition temperature less than 210°C and/or a filler selected form calcium carbonate, kaolin, calcined kaolin, silica, talcum, mica, glass.

11. Bearing-holder plastic hub (4) according to claim 10, wherein the high strength polymer is PA66 and is present in an amount from 5% to 95%, the compatibilizer is PP-G-MAH and is present from 1% to 30%, the low strength polymer is PP and is present from 1% to 20% as weight fraction percentage [phc] and the filler is glass and is present from 3% to 80%.

12. Bearing-holder plastic hub (4) according to any one of claims 1 to 11, wherein the reinforcing fibres or filaments are present from 0,2% to 30% and the resin is present from 99,8% to 70% with respect to the fraction volume of the composition.

13. Bearing-holder plastic hub (4) for rotating elements, the hub being suitable for being engaged by a drive shaft (6) of a drum of washing and/or drying machines, comprising a hollow body which extends along a longitudinal axis (X-X) and supports at least a bearing (5), **characterized in that** said body comprises a blend of PA66 and PP-g-MAH, optionally further comprising PP.

14. Washing and/or drying machine comprising a drum rotatably arranged in a tub (2) by means of a hub (4) according to any one of the preceding claims.

15. Washing and/or drying machine according to claim 14, wherein a rear wall (3) of said tub is injection-moulded over said hub (4).
